# FASCICULE DE BREVET EUROPEEN

(11) **EP 2 979 561 B1**
(45) Date de publication et mention de la délivrance du brevet: **10.01.2018**
(21) Numéro de dépôt: 15174732.6
(22) Date de dépôt: 01.07.2015
(51) Int. Cl.: A41D 13/11, A62B 17/04, A62B 18/04

(54) **CAGOULE DE PROTECTION RESPIRATOIRE**
ATEMSCHUTZHAUBE
BREATHING PROTECTION HOOD

(30) Priorité: 01.08.2014 FR 1457490
(43) Date de publication de la demande: 03.02.2016
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: MAKHLOUCHE, Rachid, 38000 Grenoble (FR); ROLLAND, Christian, 38450 Vif (FR); GRAZIANI, Vincent, 38690 Chabons (FR); COHARD, Pierrick, 38490 Les Abrets (FR); ROUSSIN-BOUCHARD, Xavier, 38112 Meaudre (FR)
(74) Mandataire: De Cuenca, Emmanuel Jaime

(56) Documents cités:
- EP-A2- 1 793 147
- WO-A1-2014/031671
- US-A- 4 552 140

## Description

La présente invention concerne un équipement de protection respiratoire.

L'invention concerne plus particulièrement une cagoule de protection respiratoire, notamment pour aéronef.

L'invention concerne notamment une cagoule comprenant une enveloppe souple étanche destinée à être enfilée sur la tête d'un utilisateur l'enveloppe souple étant munie d'une fenêtre transparente et comprenant, dans sa partie inférieure, un élément de base rigide de forme générale annulaire destiné à être disposé autour du cou de l'utilisateur, l'élément de base comprenant un réservoir d'oxygène tubulaire d'oxygène sous pression muni un orifice de sortie calibré débouchant dans le volume interne de l'enveloppe souple.

Ce type de dispositif est classiquement utilisé à bord des avions lorsque l'atmosphère de la cabine est viciée (dépressurisation, fumée, agent chimique,...).

Cet équipement également doit notamment permettre au personnel navigant de combattre l'avarie, porter secours aux passagers et gérer une éventuelle évacuation de l'appareil.

Les spécifications techniques de ces dispositifs sont définies selon des classes d'utilisation (avarie en vol, protection contre l'hypoxie à haute altitude, évacuation d'urgence au sol,...).

Les équipements de protection respiratoire connus utilisent principalement deux types de source d'oxygène :
- un pain chimique (encore appelé « chandelle chimique ») générant de l'oxygène par combustion (superoxyde de potassium - KO₂, Chlorate de sodium - NaClO₃,...), ou
- un réservoir d'oxygène comprimé associée à un orifice calibré.

La technologie utilisant de l'oxygène comprimé dans une capacité scellée associée à un orifice calibré est généralement plus sûre. Néanmoins, ce type de dispositif peut avoir un volume relativement important pour son stockage dans un avion.

De plus, la mise en place et le maintien de la cagoule peut dans certains cas être problématique chez certains utilisateurs en particulier en situation de stress.

De solutions connues utilisent des demi-masques ou masques couvrant tout le visage. Ces solutions posent des problèmes d'étanchéité car l'étanchéité est difficile à réaliser dans le cadre d'un équipement qui à vocation à être universel. Pour éviter une perte d'étanchéité les systèmes connus sont relativement inconfortables et nécessitent un temps de mise en place (positionnement par sangle, boucles ou élastiques) relativement important. De plus, la résistance respiratoire est relativement importante (le demi masque sert à canaliser les fluides dans des tuyaux munis des cartouches filtrante à ses extrémités). Cf par exemple les documents EP 1793147A2 et WO2014/031671A1.

Un but de la présente invention est de pallier tout ou partie des inconvénients de l'art antérieur relevés ci-dessus.

Le document US4552140A décrit un dispositif conforme au préambule de la revendication 1.

A cette fin, la cagoule selon l'invention, par ailleurs conforme à la définition générique qu'en donne le préambule ci-dessus, est essentiellement caractérisée en ce que l'élément de base comprend au moins deux parties rigides reliées par une articulation, les deux parties étant déplaçables relativement entre une première position repliée empêchant le passage d'une tête dans la cagoule au travers de l'élément de base et une seconde position dépliée d'utilisation permettant le passage d'une tête dans la cagoule au travers de l'élément de base.

Par ailleurs, des modes de réalisation de l'invention peuvent comporter l'une ou plusieurs des caractéristiques suivantes :
- les deux parties de l'élément de base sont constituées de deux portions tubulaires cintrées reliées au niveau d'une articulation, les deux parties formant un anneau ouvert en position dépliée,
- l'ouverture de l'anneau formé les deux parties en position dépliée en est située au niveau de la face avant de la cagoule, c'est-à-dire du côté de la cagoule comprenant la fenêtre transparente,
- les deux parties de l'élément de base pivotent relativement au niveau de l'articulation entre les positions repliée et dépliée selon une plage angulaire comprise entre trente et cent quatre vingt degrés,
- les deux parties de l'élément de base sont constituées respectivement d'un réservoir d'oxygène tubulaire et d'une cartouche de filtration du dioxyde de carbone, la cartouche de filtration comprenant une entrée communiquant avec le volume intérieur de l'enveloppe souple et une sortie d'air filtré débouchant dans le volume intérieur de l'enveloppe souple, l'orifice de sortie du réservoir d'oxygène tubulaire et la sortie de d'air filtré de la cartouche de filtration étant agencés relativement pour former un dispositif venturi,
- les au moins deux parties de l'élément de base comprennent deux réservoirs d'oxygène tubulaire articulés entre et ayant au moins un orifice de sortie d'oxygène débouchant dans l'enveloppe souple,
- dans sa position repliée, le gaz sous pression du réservoir d'oxygène n'est pas mis en relation fluidique avec l'orifice de sortie tandis que dans sa position dépliée le gaz sous pression du réservoir d'oxygène est mis en relation avec l'orifice de sortie,
- la cagoule comporte un obturateur amovible empêchant la sortie d'oxygène du réservoir d'oxygène par l'orifice de sortie lorsque l'élément de base est en position pliée et autorisant automatiquement la sortie d'oxygène du réservoir d'oxygène par l'orifice de sortie lorsque l'élément de base est déplacé de sa position pliée à sa position dépliée,
- l'obturateur amovible est déplacé et/ou rompu mécaniquement par coopération avec une butée de la cagoule lorsque l'élément de base est déplacé de sa position pliée à sa position dépliée,
- l'obturateur amovible est situé au niveau de l'articulation,
- l'articulation de l'élément de base comprend une liaison rotule munie d'une pièce mâle et d'une pièce femelle situées respectivement sur les deux parties rigides,
- l'orifice de sortie comprend une buse orientée le long d'une portion d'une des deux parties rigides,
- la cagoule comprend des butées mécaniques définissant respectivement les positions repliée et dépliée,
- la cagoule comprend un mécanisme de maintien stable de la position relative des deux parties rigides par déformation élastique dans au moins une des positions parmi : la position repliée, la position dépliée,
- l'élément de base est solidaire de la base de l'enveloppe souple,
- en position dépliée l'élément de base a la forme générale d'un anneau fermé ou un anneau ouvert, notamment une forme en « C »,
- la base de l'enveloppe souple comporte un diaphragme souple ou une collerette étanche destinée à être montée autour du cou d'un utilisateur,
- en position pliée, la dimension transversale (selon une direction perpendiculaire à l'axe haut/bas de la cagoule) la plus grande de l'ouverture centrale délimitée par l'élément de base est comprise entre cinq et dix cm, en position dépliée, cette dimension transversale la plus grande de l'ouverture centrale délimitée par l'élément de base est comprise entre vingt et quarante cm,
- un organe de déploiement tel qu'un ressort est prévu entre les deux parties repliables, ledit organe de déploiement exerçant sur l'élément de base pour le disposer dans sa position dépliée,
- la cagoule comprend un organe de suspension souple disposé à l'intérieur de l'enveloppe souple, l'organe de suspension formant une capuche ou coiffe ayant une surface inférieure à la surface de l'enveloppe souple extérieure, au moins une partie de la bordure de l'organe de suspension est reliée rigidement à l'enveloppe souple, l'organe de suspension étant destiné à reposer sur le sommet de la tête de l'utilisateur à une hauteur intermédiaire entre la base et le sommet de la cagoule,
- l'organe de suspension comprend une portion comprenant au moins l'un parmi : une maille souple, une étoffe, un tissus, une zone élastique,
- l'organe de suspension comprend une portion arrière comprenant au moins l'un parmi : une maille souple, une étoffe, un tissus, une zone élastique, ladite portion arrière étant reliée à la partie arrière de l'enveloppe souple et étant destinée à reposer sur la partie arrière du sommet de la tête de l'utilisateur de la cagoule,
- la portion arrière est reliée à la partie arrière inférieure de l'enveloppe souple,
- l'organe de suspension comprend une portion, notamment une portion avant comprenant au moins l'un parmi : une portion rigide ou semi-rigide telle qu'une portion de casquette,
- la portion avant comprend au moins l'un parmi : une pièce rigide ou semi-rigide formant une visière de casquette dont une extrémité est reliée à l'enveloppe souple au-dessus de la fenêtre, de façon à maintenir à distance latéralement l'enveloppe souple par rapport à l'utilisateur de la cagoule.
- L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de face, schématique et partielle et en partie en transparence, illustrant la structure d'un exemple de réalisation possible d'une cagoule selon l'invention en position dépliée d'utilisation,
- la figure 2 une vue similaire à la figure 1 dans laquelle la cagoule est en position pliée de stockage,
- la figure 3 représente une vue de côté, schématique et partiellement en transparence, illustrant la structure d'un autre exemple de réalisation possible d'une cagoule selon l'invention,
- la figure 4 représente une vue de face, schématique et partielle, illustrant la cagoule de la figure 3,
- la figure 5 représente une vue de dessous d'un détail de la cagoule de la figure 1 ou de la figure 3,
- les figures 6 et 7 représentent des vues en perspectives d'un élément de base de la cagoule selon l'invention selon respectivement des positions repliée et dépliée,
- la figure 8 illustre un exemple de dispositif d'injection de gaz à effet venturi pouvant être mis en oeuvre dans la cagoule selon l'invention,
- la figure 9 représente un vue schématique illustrant l'intégration et le fonctionnement du dispositif d'injection de gaz dans la cagoule selon l'invention,
- la figure 10 représente une vue en coupe d'un détail d'un exemple de réalisation d'une articulation de l'élément de base de cagoule selon l'invention dans une position repliée,
- la figure 11 représente une vue similaire à celle de le figure 9 dans une position dépliée,
- la figure 12 représente une vue similaire à celle de le figure 10 dans une position dépliée selon un autre plan de coupe illustrant l'orifice d'alimentation en gaz destiné à alimenter l'intérieur de la cagoule,
- la figure 13 représente une vue de dessus d'un élément de base de la cagoule en position repliée selon un autre mode de réalisation possible.

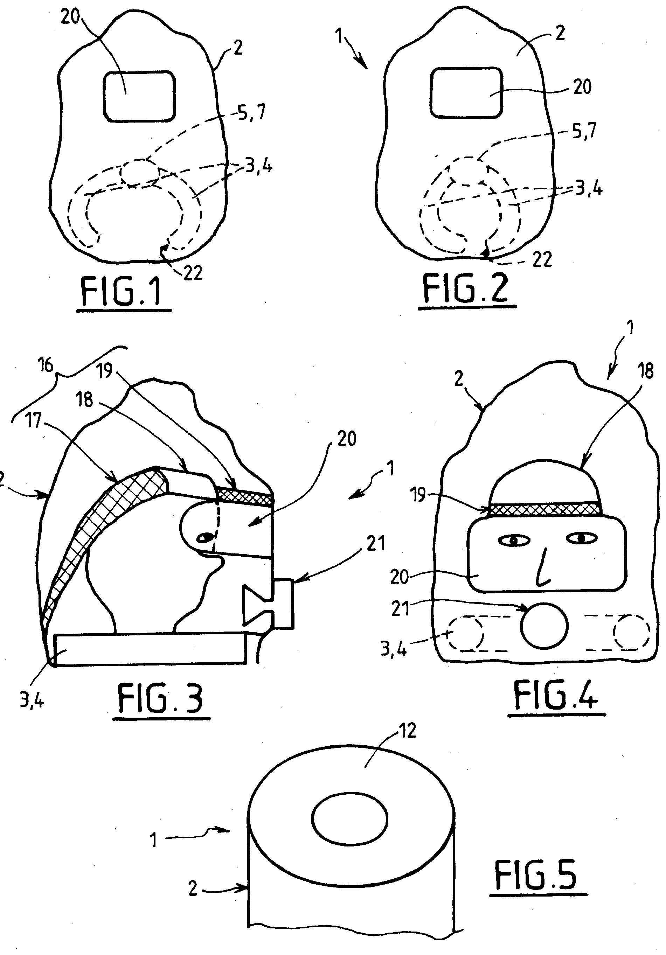

La figure 1 représente schématiquement une cagoule 1 de protection respiratoire comprenant une enveloppe 2 souple étanche munie d'une fenêtre 20 transparente destinée et enfilée sur la tête d'un utilisateur.

L'enveloppe 2 souple étanche est composée par exemple d'un textile anti-feu étanche ou rendu étanche, par exemple du type commercialisé sous la marque Nomex® et revêtu d'une enduction étanche. Cette enveloppe 2 est prévue pour être enfilée sur la tête de l'utilisateur pour isoler la tête de l'utilisateur du milieu extérieur et pour intégrer les fonctionnalités décrites ci-après. Pour réaliser une étanchéité au niveau du cou de l'utilisateur et comme décrit à la figure 5, la base de l'enveloppe 2 souple peut comporter un diaphragme souple ou une collerette 12 étanche destinée à être montée autour du cou d'un utilisateur. Par exemple, cette collerette 12 inférieure comprend une feuille de plastique percée (par exemple un polymère, notamment un polymère auto-extinguible tel que du Néoprène) pour laisser passer élastiquement la tête de l'utilisateur puis serrer son cou par la suite. L'orifice inférieur pour la tête peut être adapté à tout périmètre de cou compris entre 28 et 42cm par exemple.

L'enveloppe 2 souple délimite de préférence un volume d'environ dix litres autour de la tête de l'utilisateur qui permet de former un volume tampon de gaz respirable suffisant pour absorber les pics de ventilation de l'utilisateur. Ce volume gonflé permet également d'absorber le décalage éventuel entre le débit décroissant d'une source 3 d'oxygène et les besoins d'oxygène relativement constant de l'utilisateur.

De préférence, l'enveloppe 2 souple est munie sur sa face avant d'une visière courbée traitée anti-buée sur sa face intérieure et anti-rayure sur sa face extérieure formant une fenêtre 20 de visualisation pour l'utilisateur.

Comme visible à la figure 3, l'enveloppe 2 souple peut être munie également d'une membrane 21 phonique pour faciliter la communication directe ou via un interphone ou au travers d'un mégaphone.

La partie inférieure de l'enveloppe 2 comporte un élément 3, 4 de base rigide de forme générale annulaire destiné à être disposé autour du cou de l'utilisateur. L'élément 3, 4 de base comprend un réservoir 3 d'oxygène tubulaire d'oxygène sous pression. Cet élément de base forme une masse assurant la tenue et le maintien de la cagoule 1.

La cagoule 1 comprend également un orifice 7 de sortie calibré relié au réservoir 3 d'oxygène et débouchant dans le volume interne de l'enveloppe 2, de préférence dans la partie arrière de la cagoule 1.

Le réservoir 3 d'oxygène a par exemple un volume compris entre 0,20 et 0,4 litres et stocke du gaz à une pression comprise par exemple entre 150 et 200 bar. L'orifice 7 calibré de sortie a par exemple un diamètre compris entre 0,04 et 0,15 mm pour libérer par exemple entre vingt et soixante litres d'oxygène pendant quinze minutes. Le réservoir 3 peut être constitué d'un tube en Inox ou autre matériau, ayant un diamètre compris par exemple entre 30 à 50 mm.

Selon une caractéristique avantageuse, l'élément de base comprend au moins deux parties 3, 4 rigides reliées l'une à l'autre par une articulation 5. Les deux parties 3, 4 sont déplaçables relativement entre une première position repliée empêchant le passage d'une tête dans la cagoule 1 au travers de l'élément 3, 4 de base (cf. figure 2) et une seconde position dépliée d'utilisation permettant le passage d'une tête dans la cagoule 1 au travers de l'élément 3, 4 de base (cf. figure 1).

L'élément de base est de préférence solidaire de la base de l'enveloppe 2 souple, par exemple intégré dans un fourreau formé par l'enveloppe 2 souple.

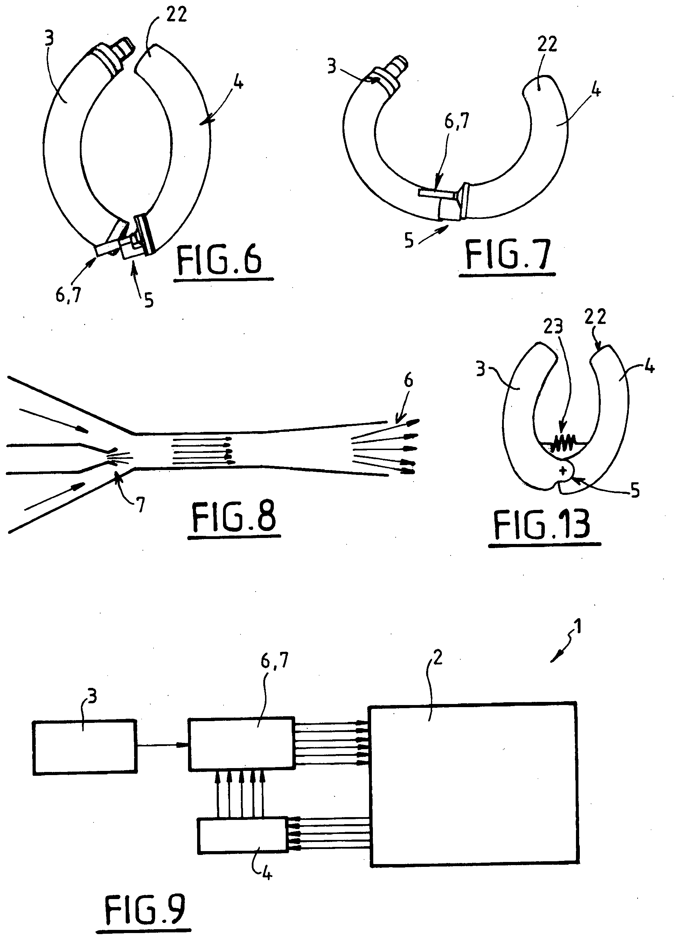

Dans l'exemple représenté aux figures, les deux parties 3, 4 articulées de l'élément de base sont constituées de deux portions tubulaires cintrées reliées au niveau d'une articulation 5. Les deux parties 3, 4 forment un anneau ouvert en position dépliée (par exemple forme de C tel que visible à la figure 7). En position pliée (cf. figure 6, les deux parties 3, 4 décrivent une forme d'ellipse).

Par exemple, en position pliée, la dimension transversale (selon une direction perpendiculaire à l'axe haut/bas de la cagoule) la plus grande de l'ouverture centrale délimitée par l'élément de base 3, 4 est comprise entre cinq_et dix cm. Ceci ne permet pas d'y passer une tête. En position dépliée, cette dimension transversale la plus grande de l'ouverture centrale délimitée par l'élément de base est par exemple comprise entre vingt et quarante cm, ce qui permet d'y passer la très grande majorité des têtes.

Par exemple, les deux parties 3, 4 de la pièce de base pivotent relativement au niveau de l'articulation 5 entre les positions repliée et dépliée selon une plage angulaire comprise entre trente et cent quatre vingt degrés (l'angle entre les deux parties 3, 4 peut varier par exemple entre trente degrés en position pliée et cent quatre vingt degrés en position dépliée).

Dans l'exemple représenté, l'élément de base est constitué de deux parties rigides 3, 4 articulées. Bien entendu, il est possible d'envisager une structure à plus de deux parties articulées (trois, quatre...). De même, en variante, l'élément de base 3. 4 pourrait avoir la forme d'un anneau fermé (chaine articulée par exemple) ou tout autre forme appropriée.

De même, dans, l'exemple ci-dessus les deux parties sont constituées respectivement d'un réservoir 3 d'oxygène sous pression et d'une cartouche 4 de filtration. En variante, les deux parties 3, 4 articulées pourraient être constituées respectivement de deux réservoirs d'oxygène distincts articulés. La filtration du dioxyde de carbone pouvant dans ce cas être de type passive ou active et intégré à autre (troisième) élément articulé (pliable) ou non. Comme illustré schématiquement à la figure 13, l'élément de base peut comporter un organe de rappel 23, tel qu'un ressort qui sollicite les parties 3, 4 articulés vers une position déterminée, notamment la position dépliée. L'organe 23 de rappel est situé de préférence au niveau de l'articulation 23.

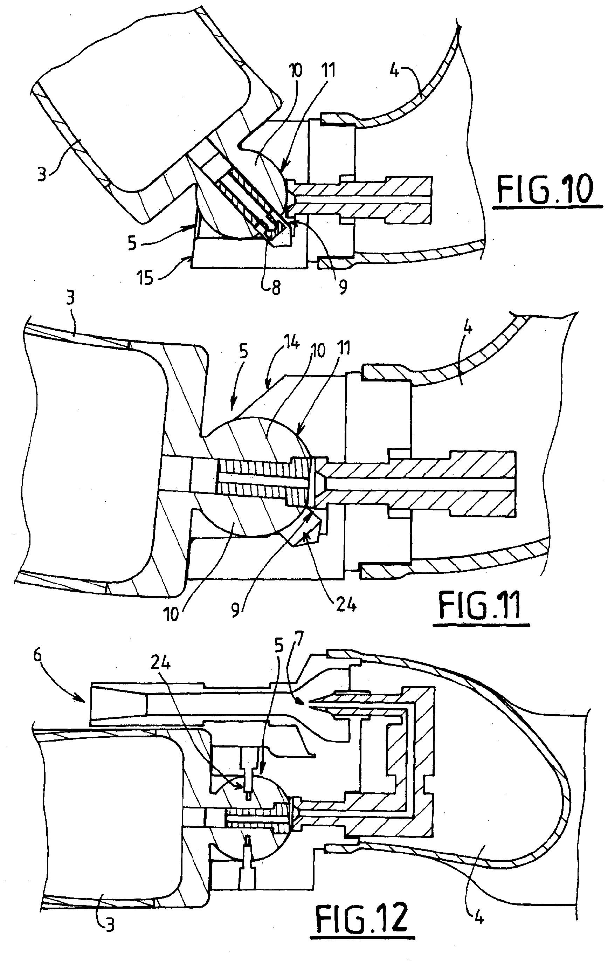

Comme illustré aux figures 10 à 12, l'articulation 5 de l'élément de base peut comprendre une liaison rotule munie d'une pièce mâle 10 (par exemple sphérique) et d'une pièce femelle 11 complémentaire appartenant respectivement sur les deux parties 3, 4 rigides. Comme illustré à la figure 12, des axes 24 peuvent être prévus pour lier mécaniquement les parties mâles 10 et femelles 11 et pour limiter le mouvement de pivotement relatif des deux parties dans un seul plan.

De même, la cagoule 1 peut comporter une ou des butées 14, 15 mécaniques définissant respectivement les positions repliée et dépliée. Ces butées peuvent être constituées de zones de contact entre les deux parties 3, 4, notamment au niveau de l'articulation 5 (cf. figures 10 et 11).

La cagoule 1 peut également comprendre le cas échéant un mécanisme de maintien stable de la position relative des deux parties 3, 4 rigides. Par exemple, un système de déformation élastique (encliquetage ou autre) peut être prévu pour former un « point dur »dans au moins une des positions parmi : la position repliée, la position dépliée.

De préférence, l'ouverture de l'anneau formé par la position dépliée les deux parties 3, 4 est située au niveau de la face avant de la cagoule 1. C'est-à-dire la partie ouverte de l'anneau est positionnée du côté de la cagoule 1 comprenant la fenêtre 20 transparente. Ceci permet de faciliter la mise en place de la cagoule 1 sur la tête. Ce positionnement de l'ouverture facilite le passage de la figure de l'utilisateur et notamment d'éventuelles lunettes, du nez, du menton....

Cette structure équilibre la répartition de masse autour de la tête de l'utilisateur. De plus, le centre de gravité du système peut ainsi être légèrement décalé vers l'arrière (par rapport au centre de la tête de l'utilisateur).

De préférence, la cagoule 1 comprend une cartouche 4 de filtration de l'air dans l'enveloppe 2 souple pour retirer le dioxyde de carbone généré par l'expiration de l'utilisateur. La cartouche 4 de filtration comprenant une entrée 22 communiquant avec le volume intérieur de l'enveloppe 2 souple (de préférence à l'avant de la cagoule) et une sortie 6 de d'air filtré débouchant dans le volume intérieur de l'enveloppe 2 (de préférence au niveau de la partie arrière de la cagoule).

Dans ce cas, et comme illustré aux figures, les deux parties 3, 4 de la pièce de base sont constituées respectivement d'un réservoir 3 d'oxygène tubulaire et d'une cartouche 4 de filtration du dioxyde de carbone. Ces deux dispositifs ont de préférence une masse et un volume semblables, ce qui confère un bon équilibre à l'ensemble.

De préférence, la cartouche 4 de filtration utilise de la chaux sodée en granulés pour capter le dioxyde de carbone. Bien entendu, tout autre système de filtration approprié peut être envisagé. Par exemple, la cartouche 4 de filtration peut également utiliser de l'Hydroxyde de lithium. Le produit de filtration peut être stocké dans la cartouche sous la forme de granulé, de feuille munie de canaux ou de matelas poreux par exemple.

De façon générale, le système captant le dioxyde de carbone peut être du type passif (tapissage de l'intérieur du volume respirable par un composé qui absorbe le CO2) ou actif (le gaz à purifier est capté et canalisé pour traverser l'élément de filtration).

La réaction de fixation du dioxyde de carbone est généralement exothermique. Ceci permet de mélanger les gaz relativement chauds issus de la cartouche 4 filtrante à l'oxygène relativement plus frais sortant du réservoir 3. Ceci permet de maintenir une température de gaz très acceptable pour l'utilisateur.

De préférence également, et comme illustré aux figures 8, 9 et 12, l'orifice 7 de sortie du réservoir 3 d'oxygène tubulaire et la sortie 6 de d'air filtré de la cartouche 4 de filtration peuvent être agencés relativement (en particulier concentriquement et coaxialement) pour former un dispositif venturi. La figure 9 schématise les flux de gaz via des flèches. L'oxygène est fourni par le réservoir 3 d'oxygène au venturi qui génère alors une aspiration au travers de la cartouche 4 filtrante. Le mélange respirable enrichi en oxygène est délivré dans l'enveloppe 2 souple. Ce dispositif venturi permet ainsi d'utiliser l'énergie de détente du gaz fourni par le réservoir 3 sous pression pour créer un courant de recirculation au travers de la cartouche 4 filtrante (chaux sodée ou d'hydroxyde de lithium).

De préférence, le venturi possède un ratio d'entrainement (débit aspiré/débit injecté) compris entre 10 et 20 sur la plage de débit injecté de 1 à 5 litre par minute par exemple.

Ce système de captation du dioxyde de carbone est ainsi indépendant de la respiration de l'utilisateur. De plus, au cours des quinze premières minutes d'utilisation, le venturi souffle par exemple entre vingt et quarante cinq litres de gaz par minute. Ceci créé un bruit (soufflement) audible par l'utilisateur. Ceci lui permet de savoir que l'équipement fonctionne correctement.

Cette solution de filtration active du dioxyde carbone produit par l'utilisateur peut être complétée (voir remplacée) par une solution de filtration passive, tel que : le tapissage de l'intérieur du volume respirable par un composé qui absorbe le dioxyde de carbone ou le positionnement d'un ou plusieurs panneaux de composés qui absorbent le dioxyde de carbone aux endroits judicieux (par exemple à proximité de la bouche de l'utilisateur).

Comme illustré à la figure 12, l'orifice de sortie 7 délivre le gaz via une buse. Cette buse peut être orientée le long, c'est-à-dire tangentiellement, à une portion d'une des deux parties 3, 4 rigides. Bien entendu, d'autres agencements sont possibles. Ainsi, la buse de délivrance du gaz peut faire un angle, par exemple un angle droit par rapport à l'élément de base.

De préférence, l'activation du gaz (libération de l'oxygène dans la cagoule 1 est déclenchée (de préférence automatiquement) lorsque la cagoule 1 est dépliée. Ainsi, par exemple dans sa position repliée, le gaz sous pression du réservoir 3 d'oxygène n'est pas mis en relation avec un circuit fluidique alimentant l'orifice 7 de sortie tandis que dans sa position dépliée le gaz sous pression du réservoir 3 d'oxygène est mis en relation avec un circuit fluidique alimentant l'orifice 7 de sortie. Ce déclenchement est généré de préférence dès que le mouvement de pivotement de l'articulation excède un seuil déterminé de quelques degrés, par exemple compris entre trois et dix degrés.

Par exemple, et comme illustré dans l'exemple de la figure 10, la cagoule 1 peut comporter un obturateur 8 amovible disposé à la sortie du réservoir 3 d'oxygène qui empêche la circulation d'oxygène vers l'orifice 7 de sortie calibré lorsque l'élément de base 3, 4 est en position pliée. L'obturateur 8 n'empêche en revanche pas la sortie d'oxygène du réservoir 3 d'oxygène par l'orifice 7 de sortie lorsque l'élément de base 3, 4 est déplacé de sa position pliée vers sa position dépliée.

Par exemple, l'obturateur 8 amovible est déplacé et/ou rompu mécaniquement par coopération avec une butée 9 de la cagoule 1 lorsque l'élément de base 3, 4 est déplacé de sa position pliée vers sa position dépliée.

Comme illustré dans l'exemple des figures 10 et 11, au bout de quelques degrés de rotation relative des deux parties 3, 4, l'obturateur 8 vient en butée contre un flanc 9 de l'autre partie 4. Par exemple l'obturateur 8 est porté par une extrémité articulée 5 du réservoir 3 tandis que la butée qui vient déplacer ou rompre cet obturateur 8 est porté par une portion adjacente articulée de l'autre partie 4 (la cartouche filtrante 4 dans cet exemple). Par exemple, lors du dépliage de l'élément 3, 4 de base; un rebord vient sectionner l'obturateur 8. L'élément de base 3, 4 est dimensionné pour que qu'aucun utilisateur ne puisse enfiler la cagoule 1 sans libérer le flux d'oxygène. Le risque d'oubli d'activation de la cagoule 1 par l'opérateur est ainsi écarté et l'activation de la délivrance de gaz ne fait pas perdre de temps à l'utilisateur.

Comme illustré à la figure 11, l'articulation 5 ou tout autre portion de la cagoule 1 peut comporter un logement 24 (par exemple un trou borgne) prévu pour récupérer et piéger l'obturateur 8 rompu (obturateur non représenté à la figure 11).

Bien entendu, en variante d'un obturateur 8 rompu définitivement l'obturateur 8 pourrait être simplement mobile et pourrait revenir élastiquement dans sa position de fermeture lorsque la cagoule 1 est repliée.

Indépendamment de sa structure articulée et de l'éventuel libération automatique de l'oxygène lors du dépliement, la cagoule 1 peut éventuellement comporter une structure interne telle que décrite ci-dessous en référence à l'exemple de réalisation des figures 3 et 4.

Ainsi, la cagoule 1 peut comprendre, à l'intérieur de l'enveloppe 2 souple, un organe 16 de suspension souple Cet organe de suspension 16 est fixé à l'enveloppe 2 souple et forme une capuche ou coiffe interne ayant une surface inférieure à la surface de l'enveloppe 2 extérieure. Au moins une partie de la bordure de l'organe 16 de suspension est reliée (collé, cousu ou autre) à l'enveloppe 2 souple, de préférence à une distance déterminée de l'extrémité supérieure de l'enveloppe 2 souple. De cette façon; lorsque l'utilisateur enfile la cagoule 1, cet organe 16 de suspension repose sur le sommet de la tête de l'utilisateur à une hauteur intermédiaire entre la base et le sommet de la cagoule 1 (cf. figure 3). C'est-à-dire que, notamment lorsque la cagoule 1 est sous pression (oxygène injecté dans le volume interne de l'enveloppe 2 souple), la cagoule 1 repose (est suspendue) par cet organe 16 de suspension sur le sommet de la tête de l'utilisateur.

Par exemple l'organe 16 de suspension est accroché à l'enveloppe 2 en partie avant et arrière et latéralement (par exemple un point d'attache à l'avant, un point d'attache à l'arrière et deux points d'attache latéraux situés respectivement de part et d'autre sur les côtés de l'enveloppe 2.Ceci permet de répartir le poids de la cagoule sur la tête de l'utilisateur et permet également de ne pas faire reposer l'élément de base 3. 4 (réservoir, cartouche filtrante...) sur les épaules de l'utilisateur.

De cette façon, la cagoule 1 peut suivre les mouvements de la tête de l'utilisateur, la fenêtre 20 restant notamment toujours en face des yeux de l'utilisateur.

De plus, cette structure détermine la position verticalement la fenêtre 20 de visualisation par rapport au sommet de la tête de l'utilisateur. La cagoule 1 peut ainsi s'affranchir d'une boucle de serrage et/ou d'une sangle à régler pour offrir un bon maintien car il y a une faible dispersion des morphologies de haut de tête des utilisateurs potentiels. La structure de la cagoule 1 est ainsi universelle et s'adapte bien à un grand nombre d'utilisateurs différents.

De plus, cette structure permet à l'enveloppe 2 extérieure de gonfler pour former un volume tampon suffisant sans « flotter » et bouger démesurément autour de la tête de l'utilisateur.

L'organe 16 de suspension comprend de préférence au moins une portion 17 comprenant au moins l'un parmi : une maille souple, une étoffe, un tissus, une zone élastique, une zone rigide, une zone semi-rigide.

Dans l'exemple des figures 3 et 4, l'organe 16 de suspension comprend, de l'arrière vers l'avant de cagoule 1: une portion 17 arrière comprenant une maille souple, une première portion 18 avant comprenant une pièce rigide ou semi-rigide et une seconde pièce 19 rigide ou semi-rigide formant une visière de casquette.

La portion arrière 17 est reliée à la partie arrière de l'enveloppe souple, de préférence au niveau de la base inférieure de cette dernière L'extrémité de la seconde portion avant 19 (visière de casquette) est reliée quant à elle à l'extrémité avant de l'enveloppe souple, de préférence au-dessus de la fenêtre 20 de vision.

Ceci permet d'éloigner d'une distance déterminée la fenêtre 20 transparente par rapport au visage de l'utilisateur (cf. figure 3). Ceci facilite l'utilisation de l'équipement avec des lunettes de vue et améliore le confort des utilisateurs même ceux avec de grands nez.

La portion 17 arrière, composée de préférence d'une maille souple voir élastique repose essentiellement sur la moitié arrière de la tête de l'utilisateur et permet de s'adapter aisément à des utilisatrices portant des chignons ou barrettes dans les cheveux (hôtesses de l'air par exemple). Ceci permet à la cagoule de s'ajuster et de se positionner correctement sur tout type d'utilisateur en répartissant le centre de gravité de la cagoule 1 pour le plus grand confort de l'utilisateur.

Bien entendu, l'organe 16 de suspension pourrait être formé d'une seule portion souple ou semi-rigide.

L'organe 16 de suspension permet de suspendre l'élément de base 3, 4 et de recentrer le centre de gravité de la cagoule par rapport à la tête de l'utilisateur en s'adaptant à tout type de coiffure. Ce système de suspension permet de dissocier les fonctions de maintien de la cagoule et de formation d'un volume tampon. Ainsi la cagoule 1 peut constituer le volume tampon adéquat tout en étant bien positionnée et en suivant les mouvements de la tête.

Ainsi, tout en étant de structure simple et peu coûteuse, la cagoule 1 selon l'invention présente de nombreux avantages par rapport à l'art antérieur.

En particulier, la cagoule 1 présente une ergonomie améliorée offrant la possibilité d'avoir un large volume de gaz autour de la tête de l'utilisateur. Sa structure, sa mise en place et son port limitent les risques d'erreur, l'inconfort et de la sensation de confinement. La cagoule a une structure universelle qui s'adapte à une grande dispersion de morphologies (tailles, lunettes, coiffures...)

L'encombrement n'est pas augmenté et même réduit dans le cas de la structure pliable.

Ainsi, l'invention peut avoir les avantages suivants :
L'épuration du dioxyde de carbone dans la cagoule 1 peut être indépendante de la façon de respirer de l'utilisateur. C'est-à-dire qu'il n'y a pas de risque de mauvaise épuration même si l'utilisateur respire par petite bouffée (respiration courte/haletante typique d'un état de panique).

Au contraire, les solutions utilisant des filtrations passives sont généralement moins efficaces et nécessitent de surdimensionner la quantité d'agent filtrant.

Contrairement à d'autres dispositifs connus, la résistance respiratoire est nulle ou très faible ce qui confère un bon confort d'utilisation pour l'utilisateur.

Contrairement aux solutions connues utilisant des demi-masques, la cagoule n'est pas exposée à un risque de défaut d'étanchéité.

La solution de filtration du dioxyde de carbone active permet d'optimiser la quantité d'entité filtrante embarquée.

La cagoule n'utilise pas de pièces en mouvement pour fournir le gaz. Ceci augmente la fiabilité de l'ensemble.

Le dispositif venturi peut être réalisé par injection de plastique. Ceci permet de réduire son coût.

L'ergonomique de la cagoule est amélioré du fait de la répartition équilibré de sa masse et de son positionnement non gênant. La cagoule peut être installée facilement et confortablement même si l'utilisateur a des lunettes de vue.

La structure pliable est fiable et solide via son articulation rigide et son étanchéité pour toute ouverture angulaire
Par rapport aux solutions connus (système venturi placé derrière la tête de l'utilisateur, dans son dos ou sur son torse) la solution ci-dessus est mieux équilibrée et plus ergonomique autour le de la tête de l'utilisateur.

## Revendications

1. Cagoule de protection respiratoire comprenant une enveloppe (2) souple étanche destinée à être enfilée sur la tête d'un utilisateur l'enveloppe souple étant munie d'une fenêtre (20) transparente et comprenant, dans sa partie inférieure, un élément (3, 4) de base rigide de forme générale annulaire destiné à être disposé autour du cou de l'utilisateur, l'élément de base comprenant un réservoir (3) d'oxygène tubulaire d'oxygène sous pression muni un orifice (7) de sortie calibré débouchant dans le volume interne de l'enveloppe (2) souple, l'élément de base comprenant au moins deux parties (3, 4) rigides **caractérisée en ce que** l'élément de base comprend au moins deux parties rigides reliées par une articulation (5), les deux parties (3, 4) étant déplaçables relativement entre une première position repliée empêchant le passage d'une tête dans la cagoule (1) au travers de l'élément (3, 4) de base et une seconde position dépliée d'utilisation permettant le passage d'une tête dans la cagoule (1) au travers de l'élément (3, 4) de base.

2. Cagoule selon la revendication 1, **caractérisée en ce que** les deux parties (3, 4) de l'élément de base sont constituées de deux portions tubulaires cintrées reliées au niveau d'une articulation (5), les deux parties (3, 4) formant un anneau ouvert en position dépliée.

3. Cagoule selon la revendication 2, **caractérisée en ce que** l'ouverture de l'anneau formé les deux parties (3, 4) en position dépliée en est située au niveau de la face avant de la cagoule (1), c'est-à-dire du côté de la cagoule (1) comprenant la fenêtre (20) transparente.

4. Cagoule selon l'une quelconque des revendications 1 à 3, **caractérisée en ce que** les deux parties (3, 4) de l'élément de base pivotent relativement au niveau de l'articulation (5) entre les positions repliée et dépliée selon une plage angulaire comprise entre trente et cent quatre vingt degrés.

5. Cagoule selon l'une quelconque des revendications 1 à 4, **caractérisée en ce que** les deux parties (3, 4) de l'élément de base sont constituées respectivement d'un réservoir (3) d'oxygène tubulaire et d'une cartouche (4) de filtration du dioxyde de carbone, la cartouche (4) de filtration comprenant une entrée (22) communiquant avec le volume intérieur de l'enveloppe (2) souple et une sortie (6) d'air filtré débouchant dans le volume intérieur de l'enveloppe (2) souple, l'orifice (7) de sortie du réservoir (3) d'oxygène tubulaire et la sortie (6) de d'air filtré de la cartouche (4) de filtration étant agencés relativement pour former un dispositif venturi.

6. Cagoule selon l'une quelconque des revendications 1 à 4, **caractérisée en ce que** les au moins deux parties (3, 4) de l'élément de base comprennent deux réservoirs (3) d'oxygène tubulaire articulés entre et ayant au moins un orifice (7) de sortie d'oxygène débouchant dans l'enveloppe (2) souple.

7. Cagoule selon l'une quelconque des revendications 1 à 6, **caractérisée en ce que**, dans sa position repliée, le gaz sous pression du réservoir (3) d'oxygène n'est pas mis en relation fluidique avec l'orifice (7) de sortie tandis que dans sa position dépliée le gaz sous pression du réservoir (3) d'oxygène est mis en relation avec l'orifice (7) de sortie.

8. Cagoule selon l'une quelconque des revendications 1 à 7, **caractérisée en ce qu'**elle comporte un obturateur (8) amovible empêchant la sortie d'oxygène du réservoir (3) d'oxygène par l'orifice (7) de sortie lorsque l'élément de base (3, 4) est en position pliée et autorisant automatiquement la sortie d'oxygène du réservoir (3) d'oxygène par l'orifice (7) de sortie lorsque l'élément de base (3, 4) est déplacé de sa position pliée à sa position dépliée.

9. Cagoule selon la revendication 8, **caractérisée en ce que** l'obturateur (8) amovible est déplacé et/ou rompu mécaniquement par coopération avec une butée (9) de la cagoule (1) lorsque l'élément de base (3, 4) est déplacé de sa position pliée à sa position dépliée.

10. Cagoule selon la revendication 7 ou 8, **caractérisée en ce que** l'obturateur (8) amovible est situé au niveau de l'articulation (5).

11. Cagoule selon l'une quelconque des revendications 1 à 10, **caractérisée en ce que** l'articulation (5) de l'élément de base comprend une liaison rotule munie d'une pièce mâle (10) et d'une pièce femelle (11) situées respectivement sur les deux parties (3, 4) rigides.

12. Cagoule selon l'une quelconque des revendications 1 à 11, **caractérisée en ce que** l'orifice (7) de sortie comprend une buse orientée le long d'une portion d'une des deux parties (3, 4) rigides.

13. Cagoule selon l'une quelconque des revendications 1 à 12, **caractérisée en ce qu'**elle comprend des butées (14, 15) mécaniques définissant respectivement les positions repliée et dépliée.

14. Cagoule selon l'une quelconque des revendications 1 à 13, **caractérisée en ce qu'**elle comprend un mécanisme de maintien stable de la position relative des deux parties (3, 4) rigides par déformation élastique dans au moins une des positions parmi : la position repliée, la position dépliée.

## Patentansprüche

1. Atemschutzhaube, umfassend eine dichte elastische Hülle (2), die dazu vorgesehen ist, über den Kopf eines Benutzers gezogen zu werden, wobei die elastische Hülle mit einem durchsichtigen Fenster (20) ausgestattet ist und in ihrem unteren Teil ein starres Basiselement (3, 4) von allgemein ringförmiger Form umfasst, das dazu vorgesehen ist, um den Hals des Benutzers angeordnet zu werden, wobei das Basiselement einen rohrförmigen Sauerstoffbehälter (3) für Drucksauerstoff umfasst, der mit einer kalibrierten Auslassöffnung (7) ausgestattet ist, die in das Innenvolumen der elastischen Hülle (2) mündet, wobei das Basiselement mindestens zwei starre Teile (3, 4) umfasst, **dadurch gekennzeichnet, dass** das Basiselement mindestens zwei durch ein Gelenk (5) verbundene starre Teile umfasst, wobei die zwei Teile (3, 4) relativ zwischen einer ersten zusammengeklappten Stellung, die den Durchtritt eines Kopfes durch das Basiselement (3, 4) in die Haube (1) verhindert, und einer zweiten aufgeklappten Gebrauchsstellung beweglich sind, die den Durchtritt eines Kopfes durch das Basiselement (3, 4) in die Haube (1) ermöglicht.

2. Haube nach Anspruch 1, **dadurch gekennzeichnet, dass** die zwei Teile (3, 4) des Basiselements aus zwei gebogenen rohrförmigen Abschnitten bestehen, die im Bereich eines Gelenks (5) verbunden sind, wobei die zwei Teile (3, 4) in der aufgeklappten Stellung einen offenen Ring bilden.

3. Haube nach Anspruch 2, **dadurch gekennzeichnet, dass** die Öffnung des Rings, die von den zwei Teilen (3, 4) in aufgeklappter Stellung gebildet wird, im Bereich der Vorderfläche der Haube (1) liegt, das heißt auf der Seite der Haube (1), die das durchsichtige Fenster (20) umfasst.

4. Haube nach einem der Ansprüche 1 bis 3, **dadurch gekennzeichnet, dass** die zwei Teile (3, 4) des Basiselements relativ zum Bereich des Gelenks (5) zwischen der zusammengeklappten und aufgeklappten Stellung gemäß einem Winkelbereich schwenken, der zwischen dreißig und einhundertachtzig Grad beträgt.

5. Haube nach einem der Ansprüche 1 bis 4, **dadurch gekennzeichnet, dass** die zwei Teile (3, 4) des Basiselements jeweils aus einem rohrförmigen Sauerstoffbehälter (3) und einer Kohlendioxid-Filterkartusche (4) bestehen, wobei die Filterkartusche (4) einen Einlass (22) umfasst, der mit dem Innenvolumen der elastischen Hülle (2) kommuniziert, und einen Auslass (6) für gefilterte Luft, der in das Innenvolumen der elastischen Hülle (2) mündet, wobei die Auslassöffnung (7) des rohrförmigen Sauerstoffbehälters (3) und der Auslass (6) für gefilterte Luft der Filterkartusche (4) relativ angeordnet sind, um eine Venturivorrichtung zu bilden.

6. Haube nach einem der Ansprüche 1 bis 4, **dadurch gekennzeichnet, dass** die mindestens zwei Teile (3, 4) des Basiselements zwei rohrförmige Sauerstoffbehälter (3) umfassen, die dazwischen angelenkt sind und mindestens eine Sauerstoffauslassöffnung (7) besitzen, die in die elastische Hülle (2) mündet.

7. Haube nach einem der Ansprüche 1 bis 6, **dadurch gekennzeichnet, dass** in ihrer zusammengeklappten Stellung das Druckgas des Sauerstoffbehälters (3) nicht mit der Auslassöffnung (7) in Fluidbeziehung gebracht wird, während in ihrer aufgeklappten Stellung das Druckgas des Sauerstoffbehälters (3) mit der Auslassöffnung (7) in Beziehung gebracht wird.

8. Haube nach einem der Ansprüche 1 bis 7, **dadurch gekennzeichnet, dass** sie einen entfernbaren Verschluss (8) umfasst, der das Auslassen von Sauerstoff aus dem Sauerstoffbehälter (3) durch die Auslassöffnung (7) verhindert, wenn sich das Basiselement (3, 4) in geklappter Stellung befindet, und automatisch das Auslassen von Sauerstoff aus dem Sauerstoffbehälter (3) durch die Auslassöffnung (7) gestattet, wenn das Basiselement (3, 4) von seiner geklappten Stellung in seine aufgeklappte Stellung bewegt wird.

9. Haube nach Anspruch 8, **dadurch gekennzeichnet, dass** der entfernbare Verschluss (8) durch Zusammenwirken mit einem Anschlag (9) der Haube (1) mechanisch bewegt und/oder aufgebrochen wird, wenn das Basiselement (3, 4) von seiner geklappten Stellung in seine aufgeklappte Stellung bewegt wird.

10. Haube nach Anspruch 7 oder 8, **dadurch gekennzeichnet, dass** der entfernbare Verschluss (8) im Bereich des Gelenks (5) liegt.

11. Haube nach einem der Ansprüche 1 bis 10, **dadurch gekennzeichnet, dass** das Gelenk (5) des Basiselements eine Kugelgelenkverbindung umfasst, die mit einem männlichen Stück (10) und einem weiblichen Stück (11) ausgestattet ist, die jeweils an den zwei starren Teilen (3, 4) liegen.

12. Haube nach einem der Ansprüche 1 bis 11, **dadurch gekennzeichnet, dass** die Auslassöffnung (7) eine Düse umfasst, die entlang eines Abschnitts von einem der zwei starren Teile (3, 4) ausgerichtet ist.

13. Haube nach einem der Ansprüche 1 bis 12, **dadurch gekennzeichnet, dass** sie mechanische Anschläge (14, 15) umfasst, die jeweils die zusammengeklappte und aufgeklappte Stellung definieren.

14. Haube nach einem der Ansprüche 1 bis 13, **dadurch gekennzeichnet, dass** sie einen Mechanismus zum Stabilhalten der relativen Stellung der zwei starren Teile (3, 4) durch elastische Verformung in mindestens einer der Stellungen aus: der zusammengeklappten Stellung, der aufgeklappten Stellung, umfasst.

## Claims

1. Breathing protection hood comprising a sealed flexible enclosure (2) designed to slide onto the head of a user, the flexible enclosure being provided with a transparent window (20) and comprising a rigid base element (3, 4) with a generally annular shape in its lower part, designed to fit around a user's neck, the base element comprising a tubular oxygen tank (3) containing oxygen under pressure fitted with a calibrated outlet orifice (7) opening up into the internal volume of the flexible enclosure (2), the base element comprising at least two rigid parts (3, 4), **characterised in that** the base element comprises at least two rigid parts connected by a hinge (5), the two parts (3, 4) being displaceable relative to each other between a first folded position preventing a head from entering into the hood (1) through the base element (3, 4) and a second unfolded usage position in which a head can pass into the hood (1) through the base element (3, 4).

2. Hood according to claim 1, **characterised in that** the two parts (3, 4) of the base element are composed of two bent tubular portions connected at a hinge (5), the two parts (3, 4) forming an open ring in the unfolded position.

3. Hood according to claim 2, **characterised in that** the opening of the ring composed of the two parts (3, 4) in the unfolded position is located at the front face of the hood (1), in other words on the side of the hood (1) comprising the transparent window (20).

4. Hood according to any one of claims 1 to 3, **characterised in that** the two parts (3, 4) of the base element pivot relative to each other at the hinge (5) between the folded and unfolded positions over an angular range of between thirty and one hundred and eighty degrees.

5. Hood according to any one of claims 1 to 4, **characterised in that** one of the two parts (3, 4) of the base element is composed of a tubular oxygen tank (3) and other part is a carbon dioxide filtration cartridge (4), the filtration cartridge (4) comprising an inlet (22) communicating with the internal volume of the flexible enclosure (2) and a filtered air outlet (6) opening up into the internal volume of the flexible enclosure (2), the outlet orifice (7) from the tubular oxygen tank (3) and the filtered air outlet (6) from the filtration cartridge (4) being arranged relative to each other so as to form a venture device.

6. Hood according to any one of claims 1 to 4, **characterised in that** the at least two parts (3, 4) of the base element comprise two tubular oxygen tanks (3) hinged to each other and having at least on oxygen outlet orifice (7) opening up into the flexible enclosure (2).

7. Hood according to any one of claims 1 to 6, **characterised in that** in its folded position, there is no fluid connection between the gas under pressure in the oxygen tank (3) and the outlet orifice (7), whereas in its unfolded position, there is a connection between the gas under pressure in the oxygen tank (3) and the outlet orifice (7)

8. Hood according to any one of claims 1 to 7, **characterised in that** it comprises a movable closer (8) preventing oxygen from escaping from the oxygen tank (3) through the outlet orifice (7) when the base element (3, 4) is in its folded position and automatically allowing oxygen to exit from the oxygen tank (3) through the outlet orifice (7) when the base element (3, 4) is moved from its folded position to its unfolded position.

9. Hood according to claim 8, **characterised in that** the movable closer (8) is displaced and/or mechanically broken by cooperation with a stop (9) on the hood (1) when the base element (3, 4) is displaced from its folded position to its unfolded position.

10. Hood according to claim 7 or 8, **characterised in that** the movable closer (8) is located at the hinge (5).

11. Hood according to any one of claims 1 to 10, **characterised in that** the hinge (5) of the base element comprises a swivel connection between a male part (10) and a female part (11) each located on one of the two rigid parts (3, 4).

12. Hood according to any one of claims 1 to 11, **characterised in that** the outlet orifice (7) comprises a nozzle along the direction of the length of a portion of one of the two rigid parts (3, 4).

13. Hood according to any one of claims 1 to 12, **characterised in that** it comprises mechanical stops (14, 15), one defining the folded position and the other defining the unfolded position.

14. Hood according to any one of claims 1 to 13, **characterised in that** it comprises a mechanism keeping the relative positions of the two rigid parts (3, 4) stable by elastic strain in at least one of the positions among the folded position and the unfolded position.
